# EUROPÄISCHE PATENTSCHRIFT

(11) **EP 2 222 968 B1**
(45) Veröffentlichungstag und Bekanntmachung des Hinweises auf die Patenterteilung: **25.05.2011**
(21) Anmeldenummer: 08864620.3
(22) Anmeldetag: 17.12.2008
(51) Int. Cl.: F16B 5/06

(54) **STECKHALTERUNG**
PLUG MOUNTING
FIXATION ENFICHABLE

(30) Priorität: 21.12.2007 DE 102007061926
(43) Veröffentlichungstag der Anmeldung: 01.09.2010
(73) Patentinhaber: SFS intec Holding AG, 9435 Heerbrugg (CH)
(72) Erfinder: COSTABEL, Sascha, 75443 Ötisheim (DE)
(86) Internationale Anmeldenummer: PCT/EP2008/067702
(87) Internationale Veröffentlichungsnummer: WO 2009/080641

(56) Entgegenhaltungen:
- DE-U1- 29 920 497
- DE-U1-202004 018 340
- DE-U1-202006 004 081
- US-A- 3 182 367

## Beschreibung

### Technisches Gebiet

Die Erfindung betrifft eine Steckhalterung zum lösbaren Haltern eines Ausstattungsteils wie einer Innenverkleidung an einem Unterbau wie einem Flugzeugrumpf, mit einem Stecker mit einem Haltebolzen, der an einem Ende wenigstens eine mit einem Clip eines an dem Ausstattungsteil montierbaren Halters in Eingriff bringbare Ausnehmung und am anderen Ende ein elastisch nachgiebiges, scheibenförmiges Dämpfungselement zur Schwingungsdämpfung und zur Montage des Steckers an dem Unterbau aufweist, das auf dem Haltebolzen zwischen einer Haltescheibe und einer axial verschiebbaren Gleitscheibe angeordnet ist.

### Stand der Technik

Eine solche Steckhalterung ist zum Beispiel aus der Gebrauchsmusterschrift DE 299 20 497 U1 bekannt. Die dort als schwingungsdämpfende Verbindungsanordnung bezeichnete Steckhalterung weist als Clip eine Haltefederanordnung mit zwei einander gegenüberliegenden Federarmen auf. Der Haltebolzen hat als Ausnehmungen für den Eingriff der Federarme zwei einander diametral gegenüberliegende Eingriffsaussparungen (Kerben). An seinem dazu entgegengesetzten Ende hat der Haltebolzen einen Kopf, der wie ein Schraubenkopf ausgebildet und mit einem Schraubendreherschlitz versehen ist. Das Dämpfungselement ist ein Schwingungsdämpferring, welcher eine periphere Nut aufweist, in welcher der Rand einer Öffnung von einem von zwei miteinander zu verbindenden Bauteilen angeordnet ist. Das Dämpfungselement ermöglicht aufgrund seiner Elastizität zugleich auch den Ausgleich der Toleranzen der zu verbindenden Bauteile. In dem Schwingungsdämpferring ist der Haltebolzen in einer zusätzlichen Büchse geführt. Das Montieren und Demontieren dieser bekannten Steckhalterung ist nicht einfach, weil bei der Montage die Öffnungen der miteinander zu verbindenden Bauteile ziemlich genau aufeinander ausgerichtet sein müssen, damit der Haltebolzen, der in der Öffnung des einen Bauteils vormontiert sein wird, in die Öffnung des anderen Bauteils, unterhalb welcher die Haltefederanordnung fest angebracht ist, eingeführt werden kann. Darüber hinaus können die Federarme nur in einer ganz bestimmten Stellung in ihre Eingriffsaussparungen in dem Haltebolzen einrasten, weshalb bei der Montage nicht nur die genannten Öffnungen aufeinander ausgerichtet werden müssen, sondern anschließend auch noch der Haltebolzen mit Hilfe eines Werkzeuges so lange gedreht werden muss, bis die Federarme in die Eingriffsaussparungen eingerastet sind. Bei der Demontage dieser bekannten Steckhalterung ist erneut ein Werkzeug erforderlich, denn zum Lösen der Verbindung muss der Haltebolzen um ca. 90° gedreht werden. Dabei werden die Enden der Federarme auf ein dem Haltebolzendurchmesser entsprechendes Maß auseinandergespreizt. In dieser entriegelten Position kann dann das eine Bauteil samt Dämpfungselement und Haltebolzen von der geöffneten Haltefederanordnung gelöst werden, welche mit dem anderen Bauteil fest verbunden ist. Die Ausbildung der Eingriffsaussparungen bei dem bekannten Haltebolzen bringt es mit sich, dass die Kraft, die sicher und über längere Zeit ausgeübt werden kann, begrenzt ist. Diese bekannte Steckhalterung wird zwar in Flugzeugen zur Befestigung von Innenverkleidungen an dem Flugzeugrumpf benutzt, dabei kommen jedoch im heutigen Stand der Technik für die verschiedensten Innenverkleidungsteile die verschiedensten Steckhalterungen zum Einsatz. Diese ermöglichen zwar eine einfache Montage und Demontage, allerdings nur unter Zuhilfenahme von Werkzeugen.

Bei der Kabinenentwicklung von neueren Flugzeugtypen wie zum Beispiel dem Airbus A350 wird angestrebt, an dem Flugzeugrumpf zu befestigende Elemente wie Toiletten, Bordküchen, Fluggastsitze, Kabinennetzwerke, Kabinenbeleuchtung und Luftdüsen jeweils als ein komplettes Kabinenmodul zu konzipieren, wobei aber alle Verbindungsstellen als flexible standardisierte Schnittstellen ausgebildet sein sollen und wobei vereinfachte Befestigungskonzepte zum Einsatz kommen sollen, die eine Montage und Demontage ohne die Verwendung von Werkzeugen ermöglichen (vgl. den Aufsatz "Kabinenentwicklung - Neuer Ansatz für die A350 - Cabin Customisation", Zeitschrift One, deutsche Ausgabe, 18. Dezember 2006, Seite 23). Außerdem soll es möglich sein, eine bestehende konfigurierte Lösung, zum Beispiel die Kabinenausstattung für einen Langstreckenflug, kurzfristig umkonfigurieren zu können, zum Beispiel die Kabinenausstattung für einen Kurzstreckenflug herrichten zu können. Die standardisierten Schnittstellen sollen dabei bei allen Flugzeugkategorien gleichermaßen anwendbar sein. Weiter soll dabei gewährleistet sein, dass die standardisierten Schnittstellen Klappergeräusche der miteinander verbundenen Bauteile sicher verhindern.

### Darstellung der Erfindung

Aufgabe der Erfindung ist es, eine Steckhalterung zu schaffen, mit der sich die vorgenannten Probleme des Standes der Technik vermeiden lassen, insbesondere der Einsatz von Werkzeug bei der Montage und Demontage der Steckhalterung vermieden wird und das Herstellen der Steckverbindung ohne genau aufeinander ausgerichtete Öffnungen der miteinander zu verbindenden Bauteile erfolgen kann.

Die Aufgabe ist erfindungsgemäß mit einer Steckhalterung der eingangs genannten Art dadurch gelöst, dass die Ausnehmung eine Ringnut mit zwei radial ausgebildeten Nutseitenwänden ist und dass der Clip ein federvorgespannter Schieber ist, der in einem Gehäuse des Halters so gelagert ist, dass er beim Einführen des Haltebolzens in eine Öffnung des Gehäuses durch ein Ende des Haltebolzens relativ zu der Öffnung gegen die Federvorspannung verschoben und anschließend durch die Federvorspannung in die Ringnut des Haltebolzens eingerastet wird.

Die mit der Steckhalterung nach der Erfindung erzielte Verbindung lässt sich einfacher als bei der eingangs dargelegten bekannten Steckhalterung herstellen und lösen, weil die Öffnung des Gehäuses des Halters so dimensioniert und positioniert werden kann, dass eine genaue gegenseitige Ausrichtung der Öffnungen der beiden miteinander zu verbindenden Bauteile bei der Montage nicht erforderlich ist. Bei der erfindungsgemäß ausgebildeten Steckhalterung braucht lediglich der Haltebolzen des Steckers, mit dem das zu befestigende Bauteil versehen ist, in die Öffnung des Gehäuses des Halters des anderen Bauteils eingeführt zu werden. Dabei ist es unerheblich, ob eine Öffnung in dem Schieber, in die der Haltebolzen einzuführen ist, mit diesem genau fluchtet, denn erfindungsgemäß wird durch ein Ende des Haltebolzens der Schieber gegen die Federvorspannung verschoben, wobei die Federvorspannung anschließend dafür sorgt, dass der Schieber in der Ringnut des Haltebolzens eingerastet wird. Darüber hinaus ist weder für die Montage noch für die Demontage ein Werkzeug erforderlich, denn das Herstellen der Verbindung erfolgt einfach durch Einstecken nach dem Prinzip "Plug and Play" oder "Snap and Click". Das Lösen der erfindungsgemäßen Steckhalterung kann beispielsweise einfach dadurch erfolgen, dass mit einem Finger gegen eine besondere Handhabe gedrückt wird, um den Schieber gegen die Federvorspannung soweit zurückzuschieben, bis er den Haltebolzen freigibt.

Vorteilhafte Ausgestaltungen der Erfindung bilden die Gegenstände der Unteransprüche.

Wenn in einer Ausgestaltung der Steckhalterung nach der Erfindung das der Ringnut benachbarte Ende des Haltebolzens als eine kugelig abgerundete Kuppe ausgebildet ist, lässt sich die Steckverbindung mit relativ wenig Kraftaufwand herstellen. Die kugelig abgerundete Kuppe ermöglicht, den Schieber in dem Gehäuse des Halters einfach zur Seite zu schieben.

Wenn in einer weiteren Ausgestaltung der Steckhalterung nach der Erfindung die Haltescheibe und die Gleitscheibe auf dem Haltebolzen an einem von dem Haltebolzen lösbaren Anschlag bzw. an einer an dem Haltebolzen angeformten Schulter abstützbar sind, lässt sich das Dämpfungselement auf einfache Weise auf dem Haltebolzen montieren und dieser anschließend an einem Unterbau od. dgl. vormontieren.

Wenn in einer Ausgestaltung der Steckhalterung nach der Erfindung die Öffnung eine Bohrung oder ein Langloch ist, lässt sich wahlweise eine Verbindung herstellen, bei der der Haltebolzen anschließend nicht mehr oder noch über die Länge des Langloches verschiebbar ist.

Wenn in einer weiteren Ausgestaltung der Steckhalterung nach der Erfindung ein Exzenterhebel zum Entriegeln des Halters durch Verlagern des Schiebers entgegen der Federvorspannung eingesetzt wird, lässt sich die Verbindung auf besonders einfache Weise lösen.

Wenn in einer weiteren Ausgestaltung der Steckhalterung nach der Erfindung der Schieber eine mit der Öffnung des Gehäuses in Deckung bringbare Öffnung aufweist, die einen mit der Ringnut des Haltebolzens in Eingriff bringbaren Rand hat, lässt sich auf einfache Weise ein sicherer Eingriff des Schiebers in der Ringnut des Haltebolzens gewährleisten.

Wenn in einer weiteren Ausgestaltung der Steckhalterung nach der Erfindung an dem Gehäuse ein erster Anschlag für den Exzenterhebel so ausgebildet ist, dass bei gegenseitiger Anlage derselben die Öffnungen des Gehäuses und des Schiebers zur Demontage des Bolzens in Deckung sind, lässt sich die Verbindung sozusagen "blind" einfach durch Umlegen des Exzenterhebels lösen.

Wenn in einer weiteren Ausgestaltung der Steckhalterung nach der Erfindung an dem Gehäuse ein zweiter Anschlag für den Exzenterhebel so ausgebildet ist, dass bei gegenseitiger Anlage derselben die Öffnungen des Gehäuses und des Schiebers zum Einführen und Verriegeln des Haltebolzens gegeneinander versetzt sind, lässt sich der Halter besonders einfach in eine Stellung bringen, in welcher die Verbindung durch Druck auf den Haltebolzen hergestellt werden kann.

Wenn in einer weiteren Ausgestaltung der Steckhalterung nach der Erfindung zwei zwischen dem Gehäuse und dem Schieber angeordnete Schraubendruckfedern die Federvorspannung erzeugen, ist eine gleichmäßige Führung des Schiebers in dem Gehäuse gewährleistet.

Wenn in einer weiteren Ausgestaltung der Steckhalterung nach der Erfindung ein Abstand zwischen der Ringnut des Haltebolzens und einer der Ringnut zugewandten Unterseite der Gleitscheibe des Haltebolzens oder der Unterseite eines unter der Gleitscheibe auf dem Haltebolzen angeordneten Ausstattungsteils kleiner gewählt ist als ein Abstand zwischen einer zugewandten Oberseite des Schiebers und einer Auflagefläche des Gehäuses, auf der die Unterseite der Gleitscheibe oder des Ausstattungsteils zu liegen kommt, so dass im Schließzustand der Steckhalterung das Dämpfungselement axial etwas zusammengedrückt ist, lässt sich auf einfache Weise hoher Druck über lange Zeit in der durch die Steckhalterung hergestellten Verbindung aufrechterhalten. Dadurch wird Spiel und werden somit Klappergeräusche mit Sicherheit vermieden.

Ausführungsbeispiele der Erfindung werden im Folgenden unter Bezugnahme auf die Zeichnungen näher beschrieben.

### Kurze Beschreibung der Zeichnungen

Es zeigt
- Fig. 1: in einer auseinandergezogenen isometrischen Darstellung eine Aus- führungsform des Steckers nach der Erfindung,
- Fig. 2: in einer auseinandergezogenen isometrischen Darstellung eine Aus- führungsform des Halters nach der Erfindung,
- Fig. 3: in einer Seitenansicht ein Ausführungsbeispiel der Steckhalterung nach der Erfindung im Verriegelungszustand,
- Fig. 4: eine Schnittansicht nach der Linie IV-IV in Fig. 3,
- Fig. 5: eine Schnittansicht nach der Linie V-V in Fig. 4,
- Fig. 6: eine Darstellung der Steckhalterung wie in Fig. 3, jedoch im Entriege- lungszustand,
- Fig. 7: eine Schnittansicht nach der Linie VII-VII in Fig. 6,
- Fig. 8: eine Schnittansicht nach der Linie VIII-VIII in Fig. 7,
- Fig. 9: eine Darstellung der Steckhalterung wie in Fig. 3, jedoch im Ruhezu- stand ohne Eingriff des Haltebolzens in den Halter,
- Fig. 10: eine Schnittansicht nach der Linie X-X in Fig. 9 und
- Fig. 11: eine Schnittansicht nach der Linie XI-XI in Fig. 10.

Ausführliche Beschreibung von Ausführungsformen und Erfindung

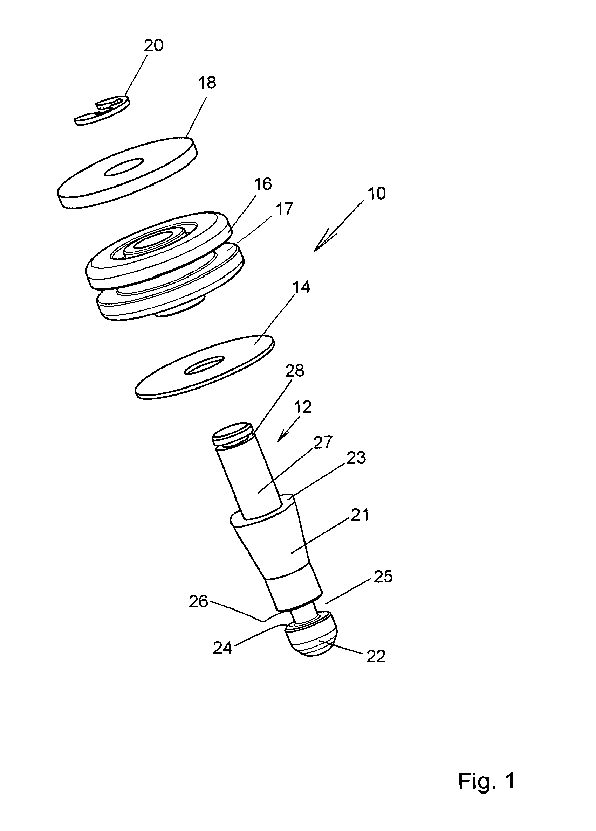

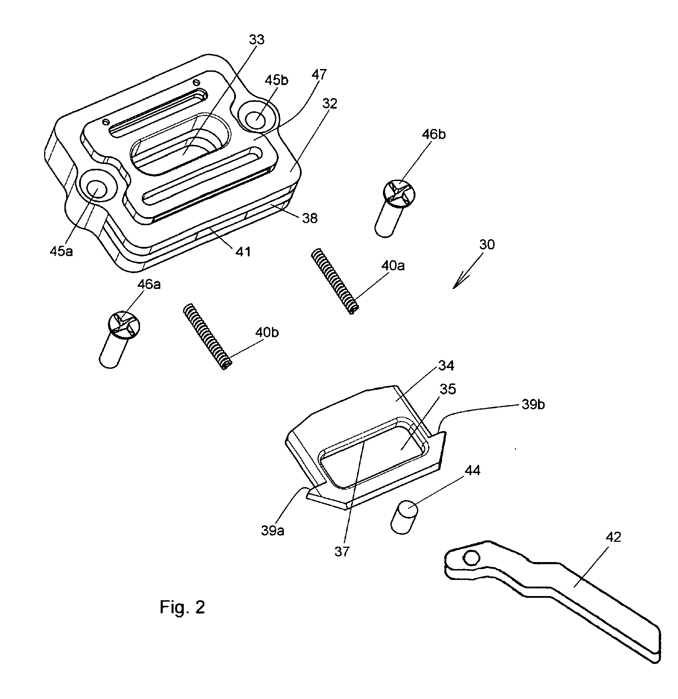

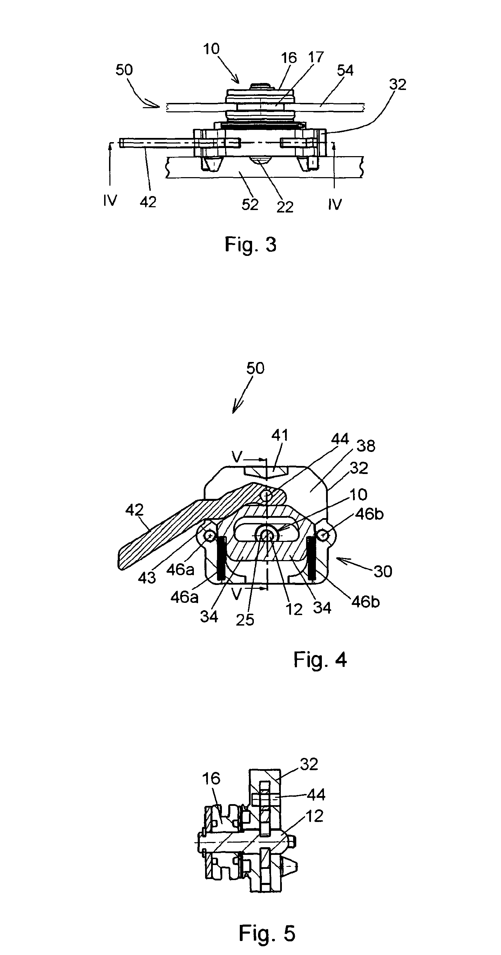

Eine Ausführungsform einer insgesamt mit 50 bezeichneten Steckhalterung nach der Erfindung ist in den Fig. 3 - 11 in Ver- und Entriegelungsstellungen in verschiedenen Ansichten gezeigt, auf die weiter unten noch näher eingegangen wird. Die Steckhalterung 50 dient zum lösbaren Haltern eines Ausstattungsteils 52 an einem Unterbau 54. Das Ausstattungsteil 52 kann z.B. die Innenverkleidung der Kabine eines Flugzeuges sein. Der Unterbau 54 kann beispielsweise der Flugzeugrumpf sein. Ebenso könnte es sich um entsprechende Teile eines Kraftfahrzeuges handeln. Die Steckhalterung 50 besteht aus einem insgesamt mit 10 bezeichneten und in Fig. 1 im einzelnen dargestellten Stecker und aus einem insgesamt mit 30 bezeichneten und in Fig. 2 im Einzelnen dargestellten Halter, die nun zunächst im Einzelnen beschrieben werden.

Fig. 1 zeigt ein Ausführungsbeispiel des Steckers 10 nach der Erfindung in einer auseinandergezogenen isometrischen Darstellung. Der Stecker 10 umfasst einen Haltebolzen 12, eine Gleitscheibe 14, ein scheibenförmiges Dämpfungselement 16, eine Haltescheibe 18 und einen Feder- oder Seegerring 20. Das Dämpfungselement besteht aus einem elastisch nachgiebigen Material, z.B. einem Elastomer. Es dient zur Schwingungsdämpfung und zur Montage des Steckers 10 an dem Unterbau 54. Ein Ende des Haltebolzens 12 ist als eine kugelig abgerundete Kuppe 22 ausgebildet. Benachbart zu der Kuppe 22 hat der Haltebolzen 12 eine Ausnehmung, die eine Ringnut 25 mit zwei radial ausgebildeten Nutseitenwänden 24 und 26 ist. Anschließend hat der Haltebolzen 12 einen sich konisch erweiternden Schaftabschnitt 21, so dass an dem Haltebolzen 12 eine Schulter 23 angeformt ist. Auf die konische Ausbildung des Schaftabschnittes 21 kommt es bei der Erfindung aber nicht an. Dieser Schaftabschnitt 21 kann auch einfach zylindrisch ausgebildet, im Durchmesser aber gegenüber dem Schaftabschnitt 27 vergrößert sein, wie es in den Fig. 3 -11 dargestellt ist. Auf der Schulter 23 stützt sich die Gleitscheibe 14 ab. Die Haltescheibe 18 stützt sich einerseits an dem Federring 20 und andererseits an dem Dämpfungselement 16 ab. Das Dämpfungselement 16 stützt sich seinerseits an seiner Unterseite auf der Gleitscheibe 14 ab. Wenn das Dämpfungselement 16, die Gleitscheibe 14, die Haltescheibe 18 und der Federring 20 auf dem Haltebolzen 12 montiert sind, stützt sich die Gleitscheibe 14 auf der Schulter 23 ab und alle vorgenannten Teile sind in gegenseitiger Anlage. Wenn auf das in Fig. 1 obere Ende des Haltebolzens 12 Druck ausgeübt wird, während sich der Stecker 10 mit der Gleitscheibe 14 auf dem Halter 30 abstützt, bewegt sich in dem Maße, wie das elastisch nachgiebige Dämpfungselement 16 zusammengedrückt wird, die Gleitscheibe 14 auf einem mit kleinerem Durchmesser als der Schaftabschnitt 21 versehenen Schaftabschnitt 27 axial nach oben in Richtung zu dem Federring 20, der dabei einen Anschlag für die Haltescheibe 18 bildet und deren Aufwärtsbewegung verhindert. Zur Demontage der auf dem Schaftabschnitt 27 angeordneten Teile ist der Federring 20 lösbar, indem er aus einer Nut 28 am Ende des Schaftabschnittes 27 herauszogen wird. Die Ringnut 25 des Haltebolzens 12 ist zur Montage des Steckers 10 in dem Halter 30 mit einem Clip in Eingriff bringbar, was nun unter Bezugnahme auf Fig. 2 näher beschrieben wird.

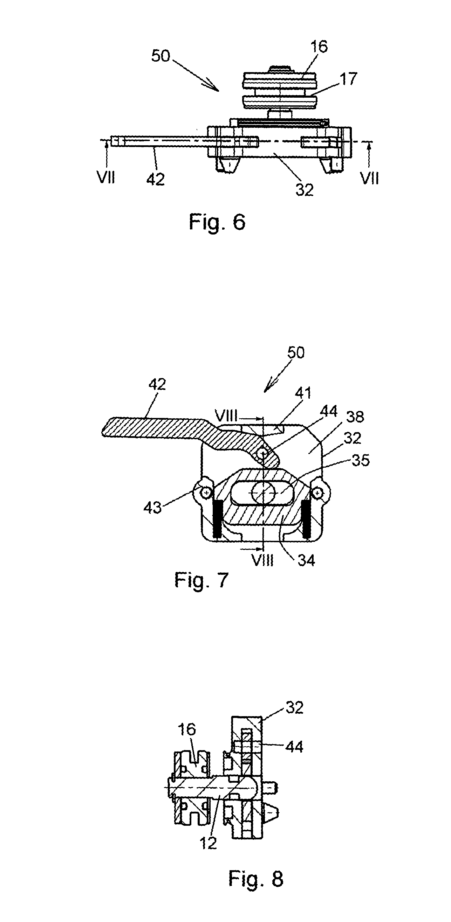

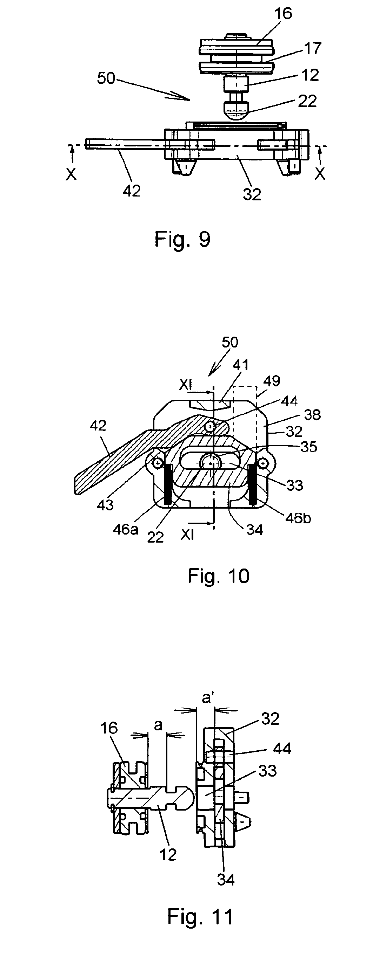

Fig. 2 zeigt in einer auseinandergezogenen isometrischen Darstellung eine Ausführungsform des Halters 30 nach der Erfindung. Der Halter 30 hat ein Gehäuse 32, in welchem als der oben genannte Clip ein federvorgespannter Schieber 34 gelagert ist. Das Gehäuse 32 hat eine zentrische Öffnung 33, die in dem dargestellten Ausführungsbeispiel als ein Langloch ausgebildet ist. Die Öffnung 33 könnte auch einfach als eine Bohrung ausgebildet sein. Die Öffnung 33 durchdringt das Gehäuse 32 vollständig, was in Fig. 2 ohne weiteres zu erkennen ist. In einer zur Seite hin offenen Ausnehmung 38 des Gehäuses 32 ist der Schieber 34 gelagert. Der Schieber 34 hat eine mit der Öffnung 33 des Gehäuses 32 in Deckung bringbare Öffnung 35. An den Seiten hat der Schieber 34 zwei Schultern 39a, 39b, mit denen er sich auf zwei in der Ausnehmung 38 des Gehäuses 32 angeordneten Schraubendruckfedern 40a bzw. 40b abstützt, wie es am besten in den Fig. 4, 7 und 10 zu erkennen ist, auf die weiter unten noch näher eingegangen wird. Die Öffnung 35 des Schiebers 34 hat einen mit der Ringnut 25 des Haltebolzens 12 in Eingriff bringbaren Rand 37. Der Rand 37 ist durch die Vorspannung der Schraubendruckfedern 40a, 40b ständig in Richtung auf eine Gehäuseseitenöffnung der Ausnehmung 38 hin vorgespannt. In der Gehäuseseitenöffnung der Ausnehmung 38 befindet sich ein Anschlag 41 für einen Exzenterhebel 42 zum Entriegeln des Halters 30 durch Verlagern des Schiebers 34 entgegen der durch die Schraubendruckfedern 40a, 40b ausgeübten Federvorspannung. Der Exzenterhebel 42 wirkt mit dem Anschlag 41 gemäß der Darstellung in Fig. 7 oder mit einem Anschlag 43 gemäß der Darstellung in Fig. 10 zusammen. Dafür ist der Exzenterhebel 42 in dem Gehäuse 32 um einen Stift 44 schwenkbar.

Der Anschlag 41 an dem Gehäuse und der Exzenterhebel 42 sind so ausgebildet, dass, wenn beide in gegenseitiger Anlage sind, die Öffnung 33 des Gehäuses 32 und die Öffnung 35 des Schiebers 34 in Deckung sind, wie es in Fig. 7 zu erkennen ist. Weiter sind der Anschlag 43 an dem Gehäuse 32 und der Exzenterhebel 42 so ausgebildet, dass bei gegenseitiger Anlage derselben, die Öffnung 33 des Gehäuses 32 und die Öffnung 35 des Schiebers 34 gegeneinander versetzt sind, wie es in den Fig. 4 und 10 zu erkennen ist. Mittel zum Befestigen des Gehäuses 32 an dem Ausstattungsteil 52 sind in dem dargestellten Ausführungsbeispiel zwei Bohrungen 45a, 45b und zwei Senkkopfschrauben 46a, 46b. Wenn der Haltebolzen 12 in die Öffnung 33 des Gehäuses eingeführt wird, wird durch das mit der Kuppe 22 versehene Ende des Haltebolzens der Schieber 35 gegen die Federvorspannung verschoben und anschließend durch die Federvorspannung in die Ringnut 25 des Haltebolzens 12 eingerastet, was nun unter Bezugnahme auf die Fig. 3 - 11 näher beschrieben wird.

Eine dort gezeigte Steckhalterung ist insgesamt mit 50 bezeichnet und stellt eine Kombination des Steckers 10 und des Halters 30 dar. Gemäß der Darstellung in Fig. 11 ist die Anordnung so getroffen, dass ein Abstand a zwischen der Ringnut 25 des Haltebolzens 12 und einer der Ringnut 25 zugewandten Unterseite der Gleitscheibe 14 des Haltebolzens oder der Unterseite eines unter der Gleitscheibe 14 auf dem Haltebolzen 12 angeordneten Ausstattungsteils (nicht dargestellt) kleiner gewählt ist als ein Abstand a' zwischen einer zugewandten Oberseite des Schiebers 34 und einer Auflagefläche 47 des Gehäuses 32, auf der die Unterseite der Gleitscheibe 14 oder des Ausstattungsteils (nicht dargestellt) zu liegen kommt, so dass im Schließzustand der Steckhalterung 50 das Dämpfungselement 16 axial etwas zusammengedrückt ist. Die Strecke, um die das Dämpfungselement 16 dabei zusammengedrückt ist, kann beispielsweise 0,4 mm betragen. Der Stecker 10 ist so zwar noch relativ zu dem Halter 30 relativ verschiebbar, steht dabei jedoch unter der Vorspannkraft des Dämpfungselements 16, so dass eine Geräuschbildung durch die durch die Steckhalterung 50 miteinander verbundenen beiden Teile 52 und 54 verhindert wird.

Fig. 3 zeigt in einer Seitenansicht ein Ausführungsbeispiel der Steckhalterung 50 nach der Erfindung im Verriegelungszustand, in welchem der Schieber 34 mit dem Rand 37 der Öffnung 35 in der Ringnut 25 des Haltebolzens 12 eingerastet ist. In Fig. 3 ist zu erkennen, dass der Unterbau 54 mit dem Rand einer Bohrung in einer Umfangsnut 17 des Dämpfungselements formschlüssig aufgenommen ist. Der Halter 30 ist, wie oben beschrieben, mit seinem Gehäuse 32 mittels der Senkkopfschrauben 46a, 46b auf einer Seite des Ausstattungsteils 52 befestigt. Die Art der Verriegelung zwischen dem Schieber 34 und dem Haltebolzen 12 ist in Fig. 4, die eine Schnittansicht nach der Linie IV-IV in Fig. 3 ist, und in Fig. 5, die eine Schnittansicht nach der Linie V-V in Fig. 4 ist, ohne weiteres zu erkennen.

Die Fig. 6 - 8 zeigen den Entriegelungszustand, in welchem der Haltebolzen 12 demontiert werden kann. In Fig. 6 ist dabei die Steckhalterung 50 wie in Fig. 3 dargestellt, jedoch im Entriegelungszustand. Fig. 7 ist eine Schnittansicht nach der Linie VII-VII in Fig. 6, und Fig. 8 ist eine Schnittansicht nach der Linie VIII-VIII in Fig. 7. In dem Verriegelungszustand ist gemäß der Darstellung in Fig. 4 der Exzenterhebel 42 nach unten geschwenkt und in Anlage an dem Anschlag 43. Hingegen ist in Fig. 7 der Exzenterhebel 42 nach oben geschwenkt und an dem Anschlag 41 in Anlage.

In den Fig. 9 - 11 ist der Ruhezustand der Steckhalterung gezeigt, in welcher der Haltebolzen 12 nicht in das Gehäuse 32 eingeführt ist, was in Fig. 9 ohne weiteres zu erkennen ist, die eine Darstellung der Steckhalterung 50 wie in Fig. 3 zeigt, jedoch im Ruhezustand. Fig. 10 ist eine Schnittansicht nach der Linie X-X in Fig. 9, und Fig. 11 ist eine Schnittansicht nach der Linie XI-XI in Fig. 10. In dem Ruhezustand ist wie in dem Verriegelungszustand der Exzenterhebel 42 an dem Anschlag 43 in Anlage, wie es in Fig. 10 zu erkennen ist. Der Entriegelungszustand nach den Fig. 6 - 8 könnte statt mit einem Exzenterhebel wie dem Exzenterhebel 42 auch mit einer (nur in Fig. 10 und nur gestrichelt dargestellten) einfachen Handhabe 49 eingestellt werden. Die Handhabe 49 würde an dem Schieber 34 anliegen oder angeformt sein und bei Betätigung durch Fingerdruck den Schieber 34 in die in den Fig. 6 - 8 gezeigte Stellung bringen.

### Bezugszeichenliste

- 10: Stecker
- 12: Haltebolzen
- 14: Gleitscheibe
- 16: Dämpfungselement
- 17: Umfangsnut
- 18: Haltescheibe
- 20: Federring
- 21: Schaftabschnitt
- 22: Kuppe
- 23: Schulter
- 24: Nutseitenwand
- 25: Ringnut
- 26: Nutseitenwand
- 27: Schaftabschnitt
- 28: Nut
- 30: Halter
- 32: Gehäuse
- 33: Öffnung
- 34: Schieber
- 35: Öffnung
- 37: Rand
- 38: Ausnehmung
- 39a, b: Schultern
- 40a, b: Schraubendruckfedern
- 41: Anschlag
- 42: Exzenterhebel
- 43: Anschlag
- 44: Stift
- 45a, b: Bohrungen
- 46a, b: Senkkopfschrauben
- 47: Auflagefläche
- 49: Handhabe
- 50: Steckhalterung
- 52: Ausstattungsteil
- 54: Unterbau

## Patentansprüche

1. Steckhalterung zum lösbaren Haltern eines Ausstattungsteils wie einer Innenverkleidung an einem Unterbau wie einem Flugzeugrumpf,
mit einem Stecker (10) mit einem Haltebolzen (12), der an einem Ende wenigstens eine mit einem Clip (34) eines an dem Ausstattungsteil montierbaren Halters (30) in Eingriff bringbare Ausnehmung (25) und am anderen Ende ein elastisch nachgiebiges, scheibenförmiges Dämpfungselement (16) zur Schwingungsdämpfung und zur Montage des Steckers (10) an dem Unterbau aufweist, das auf dem Haltebolzen (12) zwischen einer Haltescheibe (18) und einer axial verschiebbaren Gleitscheibe (14) angeordnet ist,
**dadurch gekennzeichnet, dass** die Ausnehmung eine Ringnut (25) mit zwei radial ausgebildeten Nutseitenwänden (24, 26) ist und dass der Clip ein federvorgespannter Schieber (34) ist, der in einem Gehäuse (32) des Halters (30) so gelagert ist, dass er beim Einführen des Haltebolzens (12) in eine Öffnung (33) des Gehäuses (32) durch ein Ende des Haltebolzens (12) relativ zu der Öffnung (33) gegen die Federvorspannung verschoben und anschließend durch die Federvorspannung in die Ringnut (25) des Haltebolzens (12) eingerastet wird.

2. Steckhalterung nach Anspruch 1, **dadurch gekennzeichnet, dass** das der Ringnut (25) benachbarte Ende des Haltebolzens (12) als eine kugelig abgerundete Kuppe (22) ausgebildet ist.

3. Steckhalterung nach Anspruch 1 oder 2, **dadurch gekennzeichnet, dass** die Haltescheibe (18) und die Gleitscheibe (14) auf dem Haltebolzen (12) an einem von dem Haltebolzen (12) lösbaren Anschlag bzw. an einer an dem Haltebolzen (12) angeformten Schulter (23) abstützbar sind.

4. Steckhalterung nach einem der vorhergehenden Ansprüche, **dadurch gekennzeichnet, dass** die Öffnung (33) des Gehäuses (32) eine Bohrung oder ein Langloch ist.

5. Steckhalterung nach einem der vorhergehenden Ansprüche, **gekennzeichnet durch** einen Exzenterhebel (42) zum Verlagern des Schiebers (34) entgegen der Federvorspannung zum Entriegeln des Halters (30).

6. Steckhalterung nach einem der vorhergehenden Ansprüche, **dadurch gekennzeichnet, dass** der Schieber (34) eine mit der Öffnung (33) des Gehäuses (32) in Deckung bringbare Öffnung (35) aufweist, die einen mit der Ringnut (25) des Haltebolzens (12) in Eingriff bringbaren Rand (37) hat.

7. Steckhalterung nach den Ansprüchen 5 und 6, **dadurch gekennzeichnet, dass** an dem Gehäuse (32) ein erster Anschlag (41) für den Exzenterhebel (42) so ausgebildet ist, dass bei gegenseitiger Anlage derselben die Öffnungen (33, 35) des Gehäuses (32) und des Schiebers (34) zur Demontage des Haltebolzens (12) in Deckung sind.

8. Steckhalterung nach Anspruch 7, **dadurch gekennzeichnet, dass** an dem Gehäuse (32) ein zweiter Anschlag (43) für den Exzenterhebel (42) so ausgebildet ist, dass bei gegenseitiger Anlage derselben die Öffnungen (33, 35) des Gehäuses (32) und des Schiebers (34) zum Einführen und Verriegeln des Haltebolzens (12) gegeneinander versetzt sind.

9. Steckhalterung nach einem der vorhergehenden Ansprüche, **gekennzeichnet durch** zwei zwischen dem Gehäuse (32) und dem Schieber (34) angeordnete Schraubendruckfedern (40a, 40b) zum Erzeugen der Federvorspannung.

10. Steckhalterung nach einem der vorhergehenden Ansprüche, **dadurch gekennzeichnet, dass** ein Abstand (a) zwischen der Ringnut (25) des Haltebolzens (12) und einer der Ringnut (25) zugewandten Unterseite der Gleitscheibe (14) des Haltebolzens (12) oder der Unterseite eines unter der Gleitscheibe (14) auf dem Haltebolzen (12) angeordneten Ausstattungsteils kleiner gewählt ist als ein Abstand (a') zwischen einer zugewandten Oberseite des Schiebers (34) und einer Auflagefläche (47) des Gehäuses (32), auf der die Unterseite der Gleitscheibe (14) oder des Ausstattungsteils zu liegen kommt, so dass im Schließzustand der Steckhalterung (50) das Dämpfungselement (16) axial etwas zusammengedrückt ist.

## Claims

1. A plug-type retaining means for releasably retaining a trim component, such as an interior panelling, on a substructure, such as an aircraft fuselage, with a plug (10) with a retaining stud (12) which, at one end, has at least one recess (25) which can be brought into engagement with a clip (34) of a fastener (30) which can be installed on the trim component, and which, at the other end, has an elastically resilient, disc-shaped damping element (16) for vibration damping and for installing the plug (10) on the substructure, which damping element is arranged on the retaining stud (12) between a retaining washer (18) and an axially displaceable sliding washer (14), **characterised in that** the recess is an annular groove (26) with two radially formed groove side walls (24,26), and **in that** the clip is a spring-loaded slide (34) which is so mounted in a housing (32) of the fastener (30) that, upon insertion of the retaining stud (12) into an opening (33) of the housing (32), it is displaced by one end of the retaining stud (12) relative to the opening (33) against the spring pretensioning and, subsequently, is engaged by the spring pretensioning in the annular groove (25) of the retaining stud (12).

2. A plug-type retaining means according to Claim 1, **characterised in that** the end of the retaining stud (12) adjacent the annular groove (25) is in the form of a spherically rounded dome (22).

3. A plug-type retaining means according to Claim 1 or 2, **characterised in that** the retaining washer (18) and the sliding washer (14) can be supported on the retaining stud (12) against an abutment which can be released from the retaining stud (12), or against a shoulder (23) formed on the retaining stud (12).

4. A plug-type retaining means according to any one of the preceding Claims, **characterised in that** the opening (33) of the housing (32) is a bore or a slot.

5. A plug-type retaining means according to any one of the preceding Claims, **characterised by** an eccentric lever (42) for displacing the slide (34) counter to the spring pretensioning so as to release the fastener (30).

6. A plug-type retaining means according to any one of the preceding Claims, **characterised in that** the slide (34) has an opening (35) which can be brought into congruence with the opening (33) of the housing (32) and which has a rim (37) which can be brought into engagement with the annular groove (25) of the retaining stud (12).

7. A plug-type retaining means according to Claims 5 and 6, **characterised in that** a first abutment (41) for the eccentric lever (42) is so formed on the housing (32) that, in the event of their mutual abutment, the openings (33,35) of the housing (32) and of the slide (34) are in congruence for the dismounting of the retaining stud (12).

8. A plug-type retaining means according to Claim 7, **characterised in that** a second abutment (43) for the eccentric lever (42) is so formed on the housing (32) that, in the event of their mutual abutment, the openings (33,35) of the housing (32) and of the slide (34) are offset relative to one another for the insertion and locking of the retaining stud (12).

9. A plug-type retaining means according to any one of the preceding Claims, **characterised by** two helical compression springs (40a,40b) disposed between the housing (32) and the slide (34) to generate the spring pretensioning.

10. A plug-type retaining means according to any one of the preceding Claims, **characterised in that** a distance (a) between the annular groove (25) of the retaining stud (12) and an underside of the sliding washer (14) of the retaining stud (12) facing the annular groove (25) or the underside of a trim component disposed under the sliding washer (14) on the retaining stud (12) is chosen to be smaller than a distance (a') between a facing upper side of the slide (34) and a supporting surface (47) of the housing (32), on which the underside of the sliding washer (14) or of the trim component is applied so that, in the closed condition of the plug-type retaining means (50), the damping element (16) is slightly compressed axially.

## Revendications

1. Fixation par enfichage pour fixer de manière amovible une pièce d'équipement telle qu'un habillage intérieur à une infrastructure telle qu'un fuselage d'avion comportant un connecteur (10) muni d'un goujon de fixation (12) dont une extrémité comporte au moins une cavité (25) qui peut être mise en prise avec un moyen de clipage (34) d'un support (30) installé sur la pièce d'équipement, et dont l'autre extrémité comporte un élément d'amortissement (16) en forme de rondelle, souple élastique pour amortir les vibrations et pour monter le connecteur (10) sur l'infrastructure, cet élément étant installé sur le goujon de fixation (12) entre une rondelle de fixation (18) et une rondelle coulissante (14) coulissant axialement,
fixation **caractérisée en ce que**
la cavité est une rainure annulaire (25) délimitée par deux parois latérales de rainure (24, 26), radiales, et
le clip est un coulisseau (34) précontraint par ressort, logé dans un boitier (32) du support (30), de façon que lors de l'introduction du goujon de fixation (12) dans une ouverture (33) du boîtier (32), une extrémité du goujon de fixation (12) est coulissée par rapport à l'orifice (33) contre la tension développée par le ressort et qu'ensuite, la tension du ressort l'accroche dans la rainure annulaire (25) du goujon de fixation (12).

2. Fixation par enfichage selon la revendication 1,
**caractérisée en ce que**
l'extrémité du goujon de fixation (12) au voisinage de la rainure annulaire (25), est réalisée sous la forme d'une coupelle (22) arrondie en forme de dôme.

3. Fixation par enfichage selon la revendication 1 ou 2,
**caractérisée en ce que**
la rondelle de fixation (18) et la rondelle de glissement (14) sont appuyées sur le goujon de fixation (12) contre une butée amovible du goujon de fixation (12) ou contre un épaulement (23) formé sur le goujon de fixation (12).

4. Fixation par enfichage selon l'une des revendications précédentes,
**caractérisée en ce que**
l'ouverture (33) du boîtier (32) est un perçage ou un trou oblong.

5. Fixation par enfichage selon l'une des revendications précédentes,
**caractérisée par**
un levier à excentrique (42) pour déplacer le coulisseau (34) contre la tension du ressort pour déverrouiller le support (30).

6. Fixation par enfichage selon l'une des revendications précédentes,
**caractérisée en ce que**
le coulisseau (34) comporte un orifice (35) qui peut être mis en concordance avec l'orifice (33) du boîtier (32), cet orifice (35) ayant un bord (37) qui peut être mis en prise avec la rainure annulaire (25) du goujon de fixation (12).

7. Fixation par enfichage selon les revendications 5 et 6,
**caractérisée en ce que**
le boîtier (32) comporte une première butée (41) pour le levier à excentrique (42), cette butée étant réalisée pour qu'en cas d'appui réciproque de celle-ci, les orifices (33, 35) du boîtier (32) et du coulisseau (34), viennent en concordance pour permettre le démontage du goujon de fixation (12).

8. Fixation par enfichage selon la revendication 7,
**caractérisée en ce que**
le boîtier (32) comporte une seconde butée (43) pour le levier à excentrique (42), cette butée étant réalisée pour qu'en cas d'appui réciproque, les orifices (33, 35) du boîtier (32) et du coulisseau (34), soient décalés l'un par rapport à l'autre pour introduire et verrouiller le goujon de fixation (12).

9. Fixation par enfichage selon l'une des revendications précédentes,
**caractérisée par**
deux ressorts hélicoïdaux (40a, 40b) installés entre le boîtier (32) et le coulisseau (34) pour générer la tension de ressort.

10. Fixation par enfichage selon l'une des revendications précédentes,
**caractérisée en ce que**
la distance (a) entre la rainure annulaire (25) du goujon de fixation (12) et la face inférieure de la rondelle de glissement (14) du goujon de fixation (12) tournée vers la rainure annulaire (25) ou la face inférieure d'une pièce d'équipement installée sous la rondelle de glissement (14) sur le goujon de fixation (12), est inférieure à la distance (a') entre le coté supérieur du coulisseau (34) en regard et une surface d'appui (47) du boîtier (32) sur laquelle vient s'appuyer la face inférieure de la rondelle de glissement (14) ou de la pièce d'équipement pour qu'en position fermée de la fixation par enfichage (50), l'élément d'amortissement (16) soit comprimé axialement.
